# EUROPEAN PATENT APPLICATION

(11) **EP 4 517 385 A1**
(43) Date of publication of application: **05.03.2025**
(21) Application number: 23194726.8
(22) Date of filing: 31.08.2023
(51) Int. Cl.: G01S 19/20, G01S 19/21

(54) **VERIFYING A NAVIGATION FIX**

(71) Applicant: u-blox AG, 8800 Thalwil (CH)
(72) Inventor: ZAMORA, Jesus, CH-8800 Thalwil (CH); STROM, Marten, 02600 Espoo (FI)
(74) Representative: Elkington and Fife LLP

(57) **Abstract**

According to the invention there is provided a method of determining verification of a PVT solution in a global navigation satellite system, GNSS system, receiver, the method comprising receiving a plurality of GNSS signals from a plurality of satellites, a first plurality of the signals having no trusted data and a second plurality of the signals having trusted data; estimating a PVT solution based on all the received GNSS signals; determining, for each received signal, a residual comprising the difference between the range of the space vehicle to the estimated PVT solution and a the pseudo-range of each signal; determining a statistic from the residuals of the first plurality of signals; comparing the statistic to a first value; and, responsive to the comparison, determining the position to be verified or not to be verified.

## Description

### FIELD OF THE INVENTION

The present invention relates to the field of global navigation satellite systems (GNSS). More particularly, the present invention relates to the field of verifying a position, velocity and time fix.

### BACKGROUND OF THE INVENTION

Methods of calculating positions and velocities of vehicles using Global Navigation Satellite Systems (GNSSs), such as the Global Positioning System (GPS), are known. Traditionally, the calculation of position relies on multilateration, based on the time it takes signals to arrive at a receiver from at least four different satellites. The information received from the satellites enables the receiver to calculate the positions of several satellites, and thereby calculate its own position relative to the satellites via multilateration.

It is desirable for the GNSS receiver to avoid using incorrect signals to calculate the vehicle position. Spoofing attacks that result in inaccurate position estimates are a known problem. In these attacks, "fake" GNSS signals are broadcast by an attacker, in a deliberate attempt to mislead the GNSS receiver. The fake signals have the structure and information content expected of legitimate/valid GNSS signals; therefore, the GNSS receiver is liable to accept them as valid GNSS signals. However, the content of the signals is intentionally constructed so that it results in a different (false) position fix. The attack succeeds if the GNSS receiver treats the fake signals as legitimate, and uses them to compute its position/velocity.

To aid detection of fake signals a process of authentication can be carried out. A receiver authenticates a signal to ensure that it is from a trusted source. There are many different possible authentication techniques. Authentication may be based on features at a carrier or sub carrier level for example variable pulse shaping or frequency hopping. Alternatively authentication may be based on authentication of navigation messages.

As an example, navigation message authentication can be based on a timed efficient stream loss tolerant authentication (TESLA) protocol. In a TESLA system a key, used to authenticate a MAC (message authentication code) in a first packet, is transmitted in a subsequent packet. A receiver uses the key, transmitted in the subsequent packet to authenticate the MAC in the first packet. A fake signal could not generate the MAC of the first packet using a key which has yet to be transmitted.

As an example, some GNSS systems use Open Service Navigation Message Authentication (OSNMA) and these signals are authenticated by the TESLA and MAC protocol described above.

While some satellites transmit an authentication data not all satellites do. A navigation solution (sometimes referred to as a position velocity timing (PVT) solution) based only on signals with authenticated data may be less accurate compared to a PVT solution based on both signals with authenticated data and signals with no authenticated data. However, a solution based on both signals with authenticated data and signals with no authenticated data may include fake signals and thus be an incorrect, or false solution.

It is therefore desirable to provide a method of verifying a navigation solution which uses both signals with trusted data and signals with no trusted data. Trusted data can comprise authenticated data and/or encrypted data.

### SUMMARY OF THE INVENTION

A navigation solution may be generated using all the available signals and, for each individual signal, the difference between the solution and the pseudo-range e.g distance based on the individual signal is calculated: this is known as the residual. Fake signals cause irregularities in the distribution of residual values. As an example, if the fake signals have more weight then the residuals from the trusted signals may be large. On the other hand, if the trusted signals have more weight then the fake signals will have larger residuals as the position indicated by the fake signals differs significantly from the overall solution.

Some signals are trusted whereas some signals are not trusted. Examples of trusted signals include signals comprising trusted data or some encrypted signals. Examples of signals which are not trusted are signals which do not comprise trusted data and are not encrypted. The signals comprising trusted data are known not to be fake, but the authenticity of the signals with no trusted data is not known. The residuals from the signals with no trusted data form a first distribution and the residuals from the signals with trusted data form a second distribution.

Characteristics of the first distribution can be analysed to determine the authenticity of the signals not including trusted data. One or more statistics can be determined and compared to a value. The value to which the statistic is compared may be an absolute value or a value derived from the second distribution. The first and second distributions can be compared.

If the characteristics of the first distribution fall within pre-specified criteria then the navigation solution can be determined as verified. If the characteristics do not fall within the pre-specified criteria then the navigation solution is not verified.

The invention is defined by the claims. According to a first aspect, there is provided a method of determining verification of a navigation solution in a global navigation satellite system, GNSS, receiver, the method comprising:
receiving a plurality of GNSS signals from a plurality of satellites, a first plurality of the signals having no trusted data and a second plurality of the signals having trusted data;
estimating a navigation solution based on all the received GNSS signals;
determining, for each satellite from which a signal is received, an estimated measurement from the satellite based on at least the navigation solution;
determining, for each received signal, a residual comprising the difference between the estimated measurement from the satellite transmitting the received signal and a the pseudo-range of the respective signal;
determining a statistic from the residuals of the first plurality of signals;
comparing the statistic to a first value;
responsive to the comparison determining the navigation solution to be verified or not to be verified.

Thus, if the statistic is below the first value the navigation solution is determined to be verified. If the statistic is not below the first value the navigation solution is determined not to be verified. However, different statistics may be used in different ways: for other statistics it may be that the navigation solution is determined to be verified if the statistic is above the first value and it is determined not to be verified if the statistic is not above the first value.

Trusted data may comprise data which has been authenticated or data from encrypted signals or data from signals that have been verified through an external method. Data which has been authenticated or data which is encrypted.

The pseudo-range could be a detected distance to the satellite or the detected time. The estimated measurement is based on the navigation solution and may also include corrections for transmission effects such as eg signal propagation through the ionosphere and/or troposphere. If the pseudo-range is a detected time then a given position, together with navigation solution, is used to determine the residual.

The present invention therefore provides a method of verifying a navigation solution based on both signals including trusted data and signals not including trusted data. If only signals including trusted data are used then fewer signals are likely to be used so the solution may be less accurate. On the other hand, if all signals are used (without using the claimed verification method) then there may be some fake signals which would result in an erroneous solution. Advantageously, the present invention enables all signals to be used if the signals with no trusted data can be verified. A more accurate navigation solution may therefore be found as more signals are used.

Fake, or spoof, signals may have larger residuals than authentic signals. Thus by considering the residuals it is possible to ascertain the likelihood of fake signals. For example, very large residuals may indicate spoofed signals. On the other hand, small residuals may indicate that it is unlikely that there are spoofed signals. Thus, by considering the distribution of residuals of the signals with no trusted data (the first plurality of signals) it is possible to verify the navigation solution.

A statistic is used to assess the distribution of residuals. This could be the average residual, the spread of residuals or the maximum residual below a predetermined percentile. If the statistic is below the first value then it indicates that the residuals have a low average value, or a small spread or the maximum residual below a predetermined percentile is relatively small. The first plurality of signals may therefore be deemed to be reliable and the navigation solution verified.

On the other hand if the statistic is large and above the first value, the residuals may be large and it may indicate one or more fake, or spoofed, signals. The navigation solution may then be determined not to be verified.

The initial navigation solution is estimated based on both the signals with trusted data and the signals without trusted data. Consequently, only one navigation solution initially needs to be determined, thus reducing the processing required.

The residuals form a residual distribution and comparing may comprise comparing the maximum residual of the first plurality of signals below a first predetermined percentile of the residual distribution to the first value and, responsive to the maximum residual below a first predetermined percentile being below the first value, determining the navigation solution to be verified. The residuals used are the absolute values of the residuals.

Thus, if the maximum residual below a first predetermined percentile of the residual distribution is below the first value the navigation solution is determined to be verified. If the maximum residual below a first predetermined percentile of the residual distribution is not below the first predetermined percentile the navigation solution is determined not be verified. Assessing the maximum residual below a predetermined percentile excludes only a few of the largest residuals and so assesses whether the majority of the residuals are affected by fake signals.
The first plurality of signals may be ordered incrementally by absolute size to facilitate obtaining the maximum residual below a predetermined percentile.

In addition to considering the first plurality of signals the second plurality of signals may also be assessed. A statistic from the residuals of the second plurality of signals may be determined and the statistic may then be compared to a second value. Responsive to the comparison the navigation solution may be determined to be verified or not to be verified.

Thus, if the statistic from the residuals of the second plurality of signals is below the second value and the statistic from the residuals of the first plurality of signals is below the first value the navigation solution is determined to be verified. If the statistic is not below the second value the navigation solution is determined not to be verified. However, similarly to the first plurality of signals different statistics may be used in different ways: for other statistics it may be that the navigation solution is determined to be verified if the statistic is above the second value and it is determined not to be verified if the statistic is not above the second value.

The second plurality of signals may be ordered incrementally by size to facilitate obtaining the maximum residual below a predetermined percentile.

The maximum residual of the second plurality of signals below a second predetermined percentile of the residual distribution may be compared to the second value. Responsive to the maximum residual of the second plurality of signals at the second predetermined percentile being below the second value and the maximum residual of the first plurality of signals at the first predetermined percentile being below a first value determining the navigation solution to be verified.

Thus, if the maximum residual below a first predetermined percentile of the residual distribution of the first plurality of signals is below the first value and the maximum residual of the residual distribution of the second plurality of signals is below the second value the navigation solution is determined to be verified. If the maximum residual below a first predetermined percentile of the residual distribution of the first plurality of signals is not below the first value and/or the maximum residual of the residual distribution of the second plurality of signals is not below the second value the navigation solution is determined not to be verified.

In some examples the first predetermined percentile and the second predetermined percentile are the same. In some examples the first value and the second value are the same.

In some embodiments the maximum residual of the second plurality of signals below a second predetermined percentile of the residual distribution of the second plurality of signals may be determined and determining a statistic may comprise determining the maximum residual of the first plurality of signals below a third predetermined percentile of the first plurality of signals. Comparing may comprise determining whether the maximum residual of the first plurality of signals below the third predetermined percentile is less than a predetermined percentage greater than the maximum residual below the second predetermined percentile of the second plurality of signals. Responsive to the maximum residual of the first plurality of signals below the third predetermined percentile being less than a predetermined percentage greater than the maximum residual below the second predetermined percentile of the second plurality of signals determining the navigation solution to be verified.

Thus if the maximum residual of the first plurality of signals below the third predetermined percentile is less than a predetermined percentage greater than the maximum residual below the second predetermined percentile of the second plurality of signals the navigation solution is determined to be verified. If the maximum residual of the first plurality of signals below the third predetermined percentile is not less than a predetermined percentage greater than the maximum residual below the second predetermined percentile of the second plurality of signals the navigation solution may be determined not to be verified.

This provides a way of comparing the two distributions of residuals: the residuals of the first plurality of signals and the residuals of the second plurality of signals. If the characteristics of the distributions are similar then it indicates that there are unlikely to be any fake signals. In this embodiment, the largest residuals of each distribution are excluded and the largest residuals below specific predetermined percentiles are compared. If the residual taken from the first plurality of signals is within a range of the residual taken from the second plurality of signals then it indicates that there is some conformity between the distributions and so the PVT solution (based on both the signals with trusted data and the signals without trusted data) is determined to be verified.

The second predetermined percentile and the third predetermined percentile may be the same.

In some embodiments the number of signals in the second plurality of signals is determined and responsive to the number of signals in the second plurality of signals being greater than a first signal threshold carrying out a method as described above.

Thus, if the number of signals in the second plurality of signals is greater than a first signal threshold the method of the invention is carried out. If the number of signals is not greater than a first threshold then the method of the invention is not carried out.

If there are relatively few signals with trusted data then the method of the invention may not be appropriate because there are insufficient signals with trusted data.

The method may comprise determining a dilution of precision of the second plurality of signals and, responsive to the dilution of precision being below a dilution of precision threshold, carrying out a method as described above.

Thus, if the dilution of precision is below a dilution of precision threshold the method described above is carried out. If the dilution of precision is not below a dilution of precision threshold then the method of the invention is not carried out.

If there is significant dilution of precision of the second plurality of signals then it may not be appropriate to carry out the invention as a navigation solution based only on the second plurality of signals would have too large a dilution of precision. To avoid too large a dilution of precision the first plurality of signals must therefore always be used.

The invention may comprise comparing the maximum residual of the first plurality of signals below a fourth predetermined percentile to a fourth value and, responsive to the maximum residual of the first plurality of signals below the fourth predetermined percentile being below the fourth value, determining the individual signals below the fourth predetermined percentile to be verified. This can be used if the overall navigation solution has been determined not to be verified and can be used to verify individual signals.

Thus, if the maximum residual of the first plurality of signals below the fourth predetermined percentile is below the fourth value the individual signals below the fourth predetermined percentile may be determined to be verified.

If individual signals of the first plurality of signals have been verified a new navigation solution can be estimated based on the second plurality of signals and the verified signals from the first plurality of signals. Thus, a solution is based only on verified signals.

Similarly, individual signals of the second plurality of signals can be verified by comparing the maximum residual of the second plurality of signals at a fifth predetermined percentile to a fifth value and, responsive to the maximum residual at the fifth predetermined percentile being below the fifth value, determining the individual signals below the fifth predetermined percentile to be verified.

The number of signals in the second plurality of signals may be determined and, responsive to the number of signals in the second plurality of signals being above a signal number threshold carrying out a method as described above.

The method may comprise determining a navigation solution based on only the second plurality of signals. For example, if the navigation solution is determined not to be verified a navigation solution may be determined based only on the second plurality of signals.

In some embodiments, responsive to the navigation solution not being verified a first updated navigation solution based only the second plurality of signals is estimated and, for each of the first plurality of signals, an estimated measurement from the respective satellite based on at least the first updated navigation solution. An updated residual comprising the difference between the estimated measurement from the satellite and the pseudo-range of the respective signal is determined. The maximum residual below a sixth predetermined percentile of the ordered first plurality of signals may be compared to a sixth value and, responsive to the maximum residual below the sixth predetermined percentile being below the sixth value, determining the signals below the sixth predetermined percentile to be verified.

The invention may further comprise, responsive to the maximum residual below the sixth predetermined percentile being below the sixth value, determining a second updated navigation solution based on the first plurality of signals and the signals from the second plurality of signals below the sixth predetermined percentile.

Responsive to the navigation solution not being verified a second updated navigation solution based only on the second plurality of signals and the verified signals from the first plurality of signals may be estimated. For each of the first plurality of signals an estimated measurement from the respective satellite based on at least the second updated navigation solution is determined. An updated residual comprising the difference between the estimated measurement from the respective satellite and the pseudo-range of the signal is determined. The maximum residual of the updated residual distribution of the first plurality of signals below a seventh predetermined percentile may be compared to a seventh value and, responsive to the maximum residual below the seventh predetermined percentile being below the seventh value, determining the signals below the seventh predetermined percentile to be verified. Thus, individual signals may be verified based on the updated navigation solution.

Responsive to the maximum residual below the seventh predetermined percentile being below the seventh value a second updated navigation solution based on the second plurality of signals and the signals from the first plurality of signals below the seventh predetermined percentile may be estimated.

As will be apparent, the term "navigation solution" can refer to one or more of a position, a time, and/or a velocity.

According to the invention there is provided a GNSS receiver comprising an antenna and a processor, the antenna being configured to receive a plurality of GNSS signals from a plurality of satellites, a first plurality of the signals having no trusted data and a second plurality of the signals having trusted data, the processor being configured to:
estimate a navigation solution based on all the received GNSS signals;
determine, for each satellite from which a signal is received, an estimated measurement from the satellite based on at least the navigation solution;
determine, for each received signal, a residual comprising the difference between the estimated measurement from the satellite transmitting the received signal and a pseudo-range of the respective signal;
determine a statistic from the residuals of the first plurality of signals;
compare the statistic to a first value; and
responsive to the comparison determining the navigation solution to be verified or not to be verified.

According to the invention there is provided a computer program comprising computer program code configured to cause one or more processors to perform all the steps of the method as claimed in any one of the preceding claims when said computer program is run on said one or more processors.

A GNSS receiver is also provided. The GNSS receiver may comprise an RF front-end. The RF front-end may be configured to receive GNSS signals via an antenna. The GNSS receiver may also comprise a signal processing unit. The signal processing unit may be configured to make GNSS measurements (pseudorange measurements, and optionally carrier range measurements) on the GNSS signals received by the RF front-end. The GNSS receiver may further comprise one or more processors. The one or more processors may be configured to implement the steps of the claimed method for determining verification of a navigation solution in a GNSS system, based on the GNSS measurements.

Also provided is a base station for a communications network, comprising the GNSS receiver as described above.

Also provided is a computer program comprising computer program code configured to cause one or more processors to perform all the steps of the method as described above when said computer program is executed on said one or more processors. The one or more processors may comprise or consist of one or more processors of a GNSS receiver. The computer program may be stored on a computerreadable storage medium (optionally non-transitory).

### BRIEF DESCRIPTION OF THE DRAWINGS

The invention will now be described by way of example with reference to the accompanying drawings, in which:
Fig. 1 is a block schematic diagram of a GNSS receiver for verifying a position fix in accordance with an embodiment of the present invention;
Fig. 2 is a flow diagram of a method of verifying a position fix in accordance with an embodiment of the present invention;
Fig. 3 is a diagram depicting the residual ordered incrementally by size;
Fig. 4 is a flow diagram of a method of verifying a position fix in accordance with an embodiment of the present invention;
Fig. 5 is a flow diagram of a method of verifying a position fix in accordance with an embodiment of the present invention;
Fig. 6 is a flow diagram of a method of verifying a position fix in accordance with an embodiment of the present invention; and
Fig. 7 is a a flow diagram of a method of verifying a position fix in accordance with an embodiment of the present invention;

It should be noted that these figures are diagrammatic and not drawn to scale.

### DETAILED DESCRIPTION

Reference will now be made in detail to examples according to the present disclosure, which are illustrated in the accompanying drawings. The scope of the present disclosure should not be construed as being limited to the descriptions given in this section; other examples may have different forms. These and other features, aspects, and advantages of the apparatus, systems and methods of the present disclosure will become better understood from the following description, appended claims, and accompanying drawings. It should be understood that the same reference numerals are used throughout the Figures to indicate the same or similar parts.

The present invention provides a method of determining verification of a position fix in a global navigation satellite system (GNSS). A GNSS receiver can be configured to perform a method of verifying a position fix in accordance with an embodiment of the present invention. Accordingly, the present invention also provides a GNSS receiver which is configured to determine verification of a PVT solution in a global navigation satellite system (GNSS).

Currently there are four fully operational GNSSs: the United States' Global Positioning System (GPS), Russia's Global Navigation Satellite System (GLONASS), China's BeiDou Navigation Satellite System (BDS) and the European Union's Galileo. A GNSS receiver which can acquire and track two or more GNSSs concurrently is known as a multi-GNSS receiver.

GNSS satellites of these various systems typically transmit GNSS signals in more than one frequency band. By way of example, the frequency bands which are currently available under GPS include the L1, L2 and L5 bands. For the L1 signal band, the signal carrier frequency is generally in the range of 1.559 GHz to 1.610 GHz. For the L2 signal band, the signal carrier frequency is generally in the range of 1.18845 GHz to 1.258 GHz. And, for the L5 signal band, the signal carrier frequency is generally in the range of 1.164 GHz to 1.189 GHz. Additional or different frequency bands may become available in the future for GPS.

Different signal bands have different characteristics. L1, L2 and L5 have different chipping rates: L1 has a chipping rate of 1.023MHz, L2 has a chipping rate of 511.5kHz whereas L5 has a faster chipping rate of 10.23MHz. As L5 has a faster chipping rate the peak of the correlation functions become narrower than those of L1 and L2. For example, a correlation peak of L1 corresponds to 293m whereas a correlation peak of L5 corresponds to 29.3m. Due to the narrower correlation functions, it is easier to distinguish between L5 signals transmitted by different paths (for example due to reflections in a multipath environment) than it is to distinguish between L1 or L2 signals transmitted by different paths. Thus, L5 signals are more resistant in multipath environments than L1 signals.

A GNSS receiver may operate in a single-band mode in which it performs signal processing to determine navigation measurements on signals in only one band, for example, the L1 band only or, as another example, the L5 band only. Alternatively, the GNSS receiver may operate in a dual- or multi-band mode in which it performs signal processing using signals in multiple bands within a particular constellation, for example, L1 and L5 dual-band mode in GPS. As another example, a GNSS receiver may be configured to operate in a multi-band mode in which three or more signal bands are utilized (e.g., L1, L2 and L5). It is generally expected that multi-band processing will achieve more accurate navigation measurements than single-band processing.

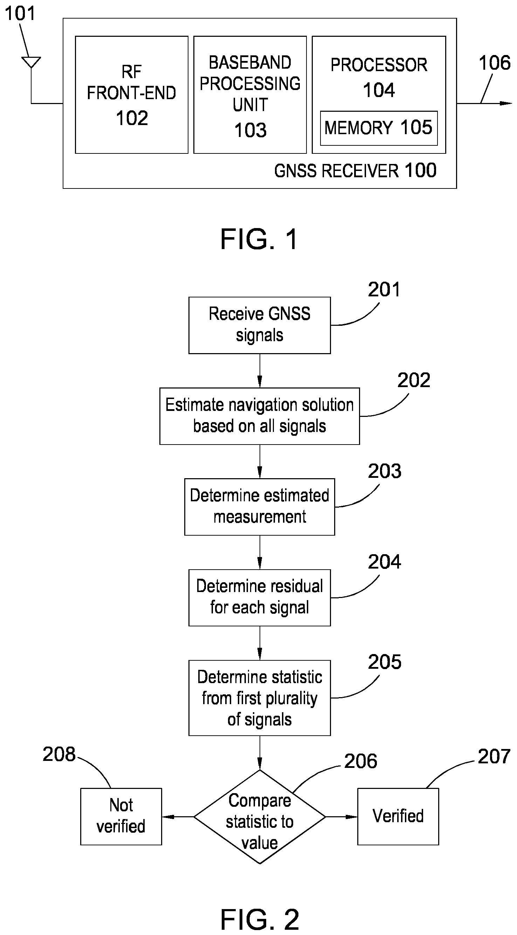

Figure 1 illustrates a block schematic diagram of a GNSS receiver 100 for determining verification of a PVT (navigation) solution in a global navigation satellite system in accordance with an embodiment of the present invention. As shown in Figure 1, the GNSS receiver 100 is configured to receive GNSS satellite signals from GNSS satellites via an antenna 101. The received signals are passed from the antenna 101 to RF front-end 102 which performs tasks such as amplification, down-conversion, filtering and digitization of the captured satellite signals. The RF front-end 102 may include further functionality such as frequency synthesis (not shown).

The receiver 100 is further configured to process the received signals using a processor 104 to extract observables and navigation data from each channel of the baseband processing unit 103 and to generate a navigation solution 106. The processor 104 may include an internal or external memory 105 for storing and/or retrieving data associated with the processing.

The navigation solution 106 generated by the receiver 100 may include the calculated position and velocity of the receiver 100 as well as a determination of precise GNSS time. The navigation solution may be derived from any one, or multiple ones of, the GNSS frequency band signals received at the antenna 101, which may include GNSS signals from different GNSS constellations. The navigation solution may also take into account discounting of any one or more of the GNSS frequency band signals received at the antenna 101. More particularly, the receiver 100 receives satellite signals from one or more GNSS constellations and the processor 104 processes these signals to provide GNSS measurements such as pseudo-ranges, carrier phases, rates of pseudo-ranges, etc. to a navigation filter. The processor 104 may, for example, implement the filter, e.g. a Kalman filter or a least-squares (LSQ) filter, which is used to determine the navigation solution 106 based on the GNSS measurements.

The processor 104 may also determine whether multipath interference is likely to be present.

The processor 104 (which may comprise on or more processors) may also determine verification of a PVT solution.

Figure 2 illustrates a flow diagram of a method in accordance with an embodiment of the present invention. In a first step 201 GNSS signals are received (by antenna 101) from a plurality of satellites. Some signals are trusted, for example including trusted data such as OSNMA whereas some signals do not include any trusted data. A first plurality of the satellites from which signals are received have no trusted data and a second plurality have trusted data. From each signal a pseudorange, comprising the distance from the respective satellite to the receiver can be determined.

In a second step, 202 a position (or navigation solution) is estimated based on all the received GNSS signals - this includes signals with trusted data and signals with no trusted data. Methods of estimating a position based on GNSS signals are well known. However, they broadly comprise determining, based on each signal, the range to each satellite. A best fit solution, often using a least squares solution is then found.

For each received signal an estimated measurement, based on the navigation solution, from each satellite is determined at step 203. The estimated measurement may take account of the ionospheric and/or tropospheric delays and the Helmert-Wolf blocking at the satellite and the receiver. Based on the estimated measurement a residual is determined in step 204. The residual is the difference between the estimated measurement and the pseudo-range of the signal. The residual therefore represents the difference between the solution determined from all the signals and the solution from that individual signal. Larger residuals therefore indicate a large difference between a solution based on all the signals and the distance based only on a single signal. A large residual may therefore indicate that a signal is more likely to have been spoofed.

Signals including trusted data are known not to have been spoofed whereas signals with no trusted data may have been spoofed. Large residuals for signals with no trusted data (the first plurality of signals) may indicate that there has been spoofing. Similarly, a large difference in residuals between the signals with no trusted data (the first plurality of signals) and signals with trusted data (the second plurality of signals) could indicate that signals with no trusted data have been spoofed.

The residuals from the first plurality of signals (with no trusted data) are then grouped together and a statistic determined in the fifth step 205. The statistic could be the average residual, or the maximum residual below a particular percentile when the residuals are ordered by size.

The statistic is compared to a value in step 206. Based on the comparison the position is determined to be verified 207 or not verified 208. Sometimes the value is a threshold value and if the statistic is below (or, sometimes, above) the threshold value the position is determined to be verified. As an example, a small average of all the residuals of the first plurality of signals may indicate that the first plurality of signals correlate well with the overall position estimation and are unlikely to have been spoofed. Therefore the overall position based on the second plurality of signals with trusted data and the first plurality of signals with no trusted data but deemed to be reliable based on the comparison of a statistic is determined to be verified. As a specific example, if the average residual is below a value the position may be determined to be verified.

After the GNSS signals are received by the antenna 201 the steps 202, 203, 204, 205, 206, 207 and 208 are carried out by the processor 104.

The method described above refers to the estimated measurement to the estimated position and the pseudo-range of the signal (i.e. these refers to distance/position). The same method could be applied to velocity measurements. However, if the position is already known (supplied from another source) then this can be used in the estimated measurement and it is only the time at the receiver which is unknown and which can be verified.

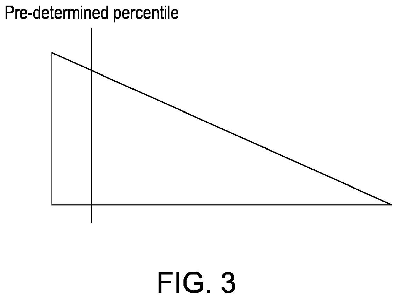

The statistic determined in the fifth step could take a variety of forms and one embodiment comprises considering the distribution of residual values. As an example, the residuals could be ordered incrementally by size, as depicted in Figure 3. The maximum residual below a predetermined percentile could be determined. If the maximum residual below a first predetermined percentile is below the first value the position determined earlier in the method may be determined to be verified.

The second plurality of signals may also be used in the verification of the PVT estimation. For this, a statistic from the residuals of the second plurality of signals is determined. In some embodiments this may be the same statistic as used for the first plurality of signals. However, in other embodiments it may be a different statistic. The statistic may be compared to a value. Alternatively a statistic from the first plurality of signals and the second plurality of signals may be compared.

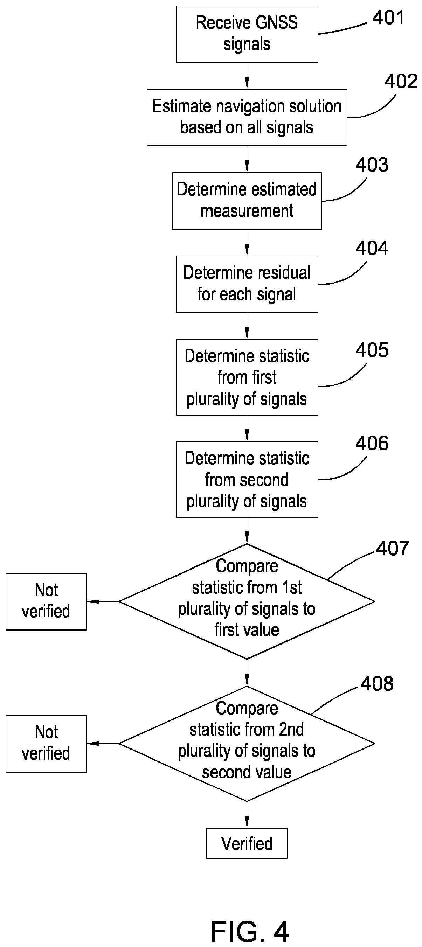

An embodiment using the second plurality of signals is depicted in Figure 4. Steps 401, 402, 403, 404, 405 are similar to corresponding steps 201, 202, 203, 204 and 205 described above. After step 405 a statistic is determined from the second plurality of signals. In this embodiment it is the maximum residual below a second predetermined percentile. However, as described above the statistic is not limited to this. Furthermore steps 405 and 406 can take place concurrently or step 406 can take place before step 405. As in step 206 of Figure 2, at step 407 the statistic from the first plurality of signals is compared to a first value. If the statistic is not below the first value then the PVT solution is determined not to be verified. If the statistic is below the first value then the statistic from the second plurality of signals is compared to the second value at step 408. If the statistic from the second plurality of signals is also below the second value then the PVT solution is determined to be verified. Steps 407 and 408 could take place concurrently or in an alternative order. However, both comparisons must be fulfilled in order for the verification to occur. If either of the comparisons fails or is not fulfilled then the PVT solution is determined not to be verified.

The first value and the second value may the same. Similarly the first predetermined percentile and the second predetermine percentile may be the same.

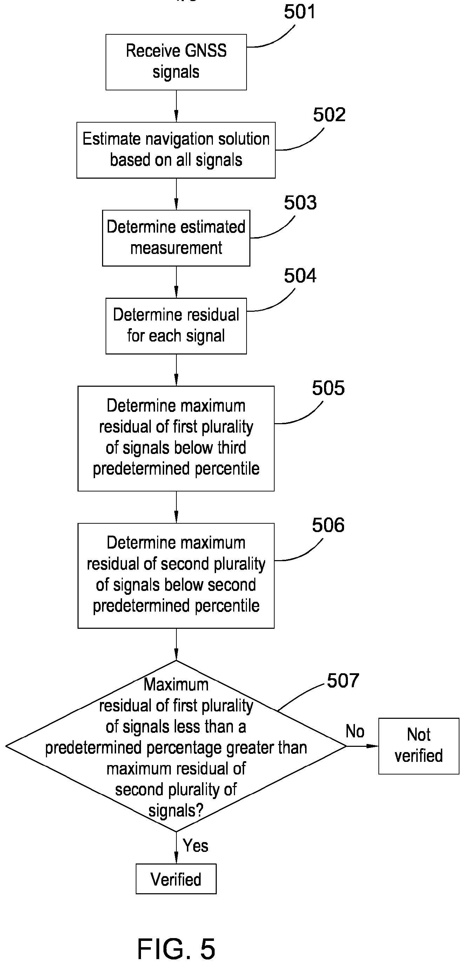

An alternative embodiment in which a statistic from the first plurality of signals and a statistic from the second plurality of signals are compared is depicted in Figure 5. Steps 501, 502, 503 and 504 are the same as corresponding steps 201, 202, 204 and 204 in Figure 2. The statistic in this embodiment is the maximum residual of the first plurality of signals below a third predetermined percentile and this is determined at step 505. At step 506 the maximum residual of the second plurality of signals below a second predetermined percentile is determined. In this example the second predetermined percentile and the third predetermined percentile are the same. Thus, the maximum residual below a predetermined percentile of the first plurality of signals and the maximum residual below the same predetermined percentile of the second plurality of signals can be compared. In particular, at step 507 it is determined whether the maximum residual of the first plurality of signals below the third predetermined percentile is less than a predetermined percentage greater than the maximum residual of the second plurality of signals below the second predetermined percentile. If it is, then the residuals are similar and so the PVT estimation is deemed verified. Advantageously, this method compares the distributions of residuals.

The method of the invention may only be suitable when there are enough signals. For example, it may only be suitable if there are enough of the second plurality of signals or if the dilution of precision of the second plurality of signals is of a suitable quality. Thus, the number of signals in the second plurality of signals may be determined and the method of the invention may only be carried out if the number of signals is above a first signal threshold. Alternatively, or additionally, the dilution of precision of the second plurality of signals is determined and only if it is below a dilution of precision threshold the method of the invention is carried out.

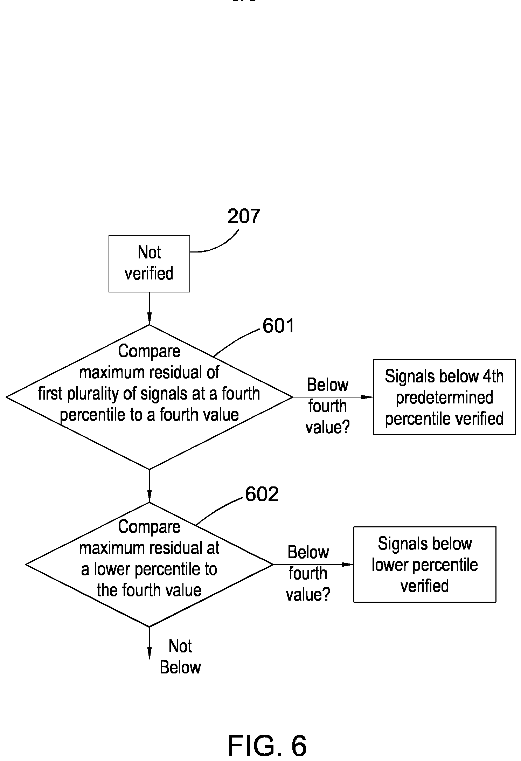

The invention can be used to verify individual signals. This could be used if the PVT estimate has not been verified 208, as depicted in Figure 6. The maximum residual of the first plurality of signals below a fourth predetermined percentile may be compared to a fourth value at step 601. If the maximum residual is below the fourth value those signals with residuals below the fourth predetermined percentile can be determined to be verified. Optionally, if the maximum residual is not below the fourth value the maximum residual at a different, lower, predetermined percentile can be compared to a value (which could be the same as the fourth value) at step 602. If the maximum residual is below the value the signals below the predetermined percentile are determined to be verified. This could be continued and repeated until either some individual signals are verified or it is determined that none of the signals are below the value.

Optionally, if the signals below the fourth predetermined percentile are verified a different (higher) predetermined percentile could be used to assess a greater number of signals.

Just as individual signals from the first plurality of signals can be verified, signals from the second plurality of signals can be verified in the same way.

If the PVT estimation is not verified then a PVT solution may be estimated based on only the second plurality of signals (with trusted data).

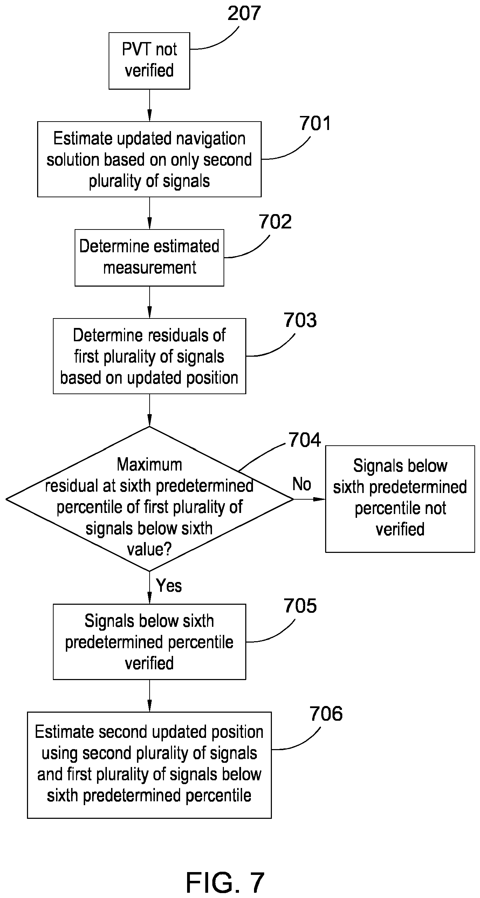

In a further embodiment in which the PVT solution has been determined not to be verified 207 is depicted in Figure 7. An updated position is estimated based on only the second plurality of signals 701. For each of the first plurality of signals an estimated measurement from the respective satellite to the updated position is determined at step 702. At step 703, for each of the first plurality of signals an updated residual is determined based on the updated estimated position. The maximum residual of the first plurality of signals below a sixth predetermined percentile is compared to a sixth value at step 704. If the maximum residual below the sixth predetermined percentile is less than the sixth value then the signals below the sixth predetermined percentile are deemed verified 705. If the maximum residual at the sixth predetermined percentile is not less than the sixth value then the signals below the sixth predetermined percentile are not verified. Although not depicted in Figure 7 the process could be repeated for different values and at different percentiles.

Optionally, a second updated position can be estimated using only the verified signals from the first plurality of signals and all of the second plurality of signals at step 706.

Step 701 of figure 7 uses only the second plurality of signals. However, step 701 could equally also use individually verified signals from the first plurality of signals and the process repeated to determine a more accurate PVT estimate.

It should be understood that when the phrase "number of satellites" is used it refers to the number of satellites from which signals are received at the given position at that point in time.

It should be understood that the scope of the present disclosure is not limited to the examples described above. Many variations will be apparent to those skilled in the art, based on the foregoing description.

In general, in the flowcharts of the Figures, the arrows between the steps do not necessarily imply a causal relationship between those steps. They merely indicate one exemplary order in which the steps may be performed. Method steps may be carried out in a different order from the exemplary order shown in the drawings.

It should be understood that various components illustrated in Fig. 1 may be implemented in hardware, or software, or a mixture of both. Furthermore, some components may be grouped together in a given implementation or may be implemented separately.. Other implementations are possible, which divide and distribute the various functions differently between hardware and software, or between different hardware components, software modules and/or processors running the software.

It should be noted that the term "above" could equally be replaced with "below" for a particular threshold.

In the claims, any reference signs placed between parentheses shall not be construed as limiting the claim. The word "comprising" does not exclude the presence of elements or steps other than those listed in a claim. However, where the word "comprising" is used, this also discloses as a special case the possibility that the elements or steps listed are exhaustive - that is, the apparatus or method may consist solely of those elements or steps. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore, in the appended claims lists comprising "at least one of: A; B; and C" should be interpreted as (A and/or B) and/or C.

In flowcharts, summaries, claims, and descriptions relating to methods, the sequence in which steps are listed is not, in general, intended to be limiting on the order in which they are carried out. The steps may be performed in a different order to that indicated (except where specifically indicated, or where a subsequent step relies on the product of a preceding step). Nevertheless, the order in which the steps are described may in some cases reflect a preferred sequence of operations.

Furthermore, in general, the various embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although these are not limiting examples. While various aspects described herein may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments described herein may be implemented by computer software executable by a data processor of the apparatus, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, or CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments as discussed herein may be practiced in various components such as integrated circuit modules. The design of integrated circuits is generally a highly automated process. Complex and powerful software tools are available for converting a logic level design into a semiconductor circuit design ready to be etched and formed on a semiconductor substrate.

## Claims

1. A method of determining verification of a navigation solution in a global navigation satellite system, GNSS, receiver, the method comprising:
receiving a plurality of GNSS signals from a plurality of satellites, a first plurality of the signals having no trusted data and a second plurality of the signals having trusted data;
estimating a navigation solution based on all the received GNSS signals;
determining, for each satellite from which a signal is received, an estimated measurement from the satellite based on at least the navigation solution;
determining, for each received signal, a residual comprising the difference between the estimated measurement from the satellite transmitting the received signal and a pseudo-range of the respective signal;
determining a statistic from the residuals of the first plurality of signals;
comparing the statistic to a first value; and
responsive to the comparison determining the navigation solution to be verified or not to be verified.

2. A method according to claim 1 wherein comparing comprises comparing the maximum residual of the first plurality of signals below a first predetermined percentile of the residual distribution to the first value; and
responsive to the maximum residual at the first predetermined percentile being below the first value determining the navigation solution to be verified.

3. A method according to either claim 1 or claim 2 further comprising:
determining a statistic from the residuals of the second plurality of signals;
comparing the statistic to a second value;
responsive to the comparison determining the navigation solution to be verified or not to be verified.

4. A method according to claim 3 further comprising:
comparing the maximum residual of the second plurality of signals below a second predetermined percentile of the residual distribution to the second value;
responsive to the maximum residual of the second plurality of signals below the second predetermined percentile being below the second value and the maximum residual of the first plurality of signals below the first predetermined percentile being below a first value determining the navigation solution to be verified.

5. A method according to claim 4 wherein the first predetermined percentile and the second predetermined percentile are the same.

6. A method according to any one of either claim 4 or claim 5 wherein the first value and the second value are the same.

7. A method according to any one of the preceding claims and further comprising:
determining the maximum residual of the second plurality of signals below a second predetermined percentile of the residual distribution of the second plurality of signals;
wherein determining a statistic comprises determining the maximum residual of the first plurality of signals below a third predetermined percentile of the first plurality of signals;
wherein comparing comprises determining whether the maximum residual of the first plurality of signals below the third predetermined percentile is less than a predetermined percentage greater than the maximum residual below the second predetermined percentile of the second plurality of signals;
responsive to the maximum residual of the first plurality of signals below the third predetermined percentile being less than a predetermined percentage greater than the maximum residual below the second predetermined percentile of the second plurality of signals determining the navigation solution to be verified.

8. A method according to claim 7 wherein the second predetermined percentile and the third predetermined percentile are the same.

9. A method according to any one of the preceding claims further comprising:
determining the number of signals in the second plurality of signals;
responsive to the number of signals in the second plurality of signals being greater than a first signal threshold carrying out a method according to any one of the preceding claims.

10. A method according to any one of the preceding claims further comprising:
determining a dilution of precision of the second plurality of signals;
responsive to the dilution of precision being below a dilution of precision threshold carrying out a method according to any one of the preceding claims.

11. A method according to any one of the preceding claims further comprising:
comparing the maximum residual of the first plurality of signals below a fourth predetermined percentile to a fourth value;
responsive to the maximum residual of the first plurality of signals below the fourth predetermined percentile being below the fourth value determining the individual signals below the fourth predetermined percentile to be verified.

12. A method according to any one of the preceding claims further comprising estimating a navigation solution based on only the second plurality of signals.

13. A method according to any one of the preceding claims further comprising, responsive to the position not being verified:
estimating a first updated navigation solution based only on the second plurality of signals;
determining, for each of the first plurality of signals, an estimated measurement from the respective satellite based on at least the first updated navigation solution;
determining, for each of the first plurality of signals, an updated residual comprising the difference between the estimated measurement from the satellite and the pseudo-range of the respective signal;
comparing the maximum residual below a sixth predetermined percentile of the first plurality of signals to a sixth value;
responsive to the maximum residual below the sixth predetermined percentile being below the sixth value determining the signals below the sixth predetermined percentile to be verified.

14. A method according to claim 13 further comprising, responsive to the maximum residual below the sixth predetermined percentile being below the sixth value determining a second updated position based on the first plurality of signals and the signals from the second plurality of signals below the sixth predetermined percentile.

15. A GNSS receiver comprising an antenna and a processor, the antenna being configured to receive a plurality of GNSS signals from a plurality of satellites, a first plurality of the signals having no trusted data and a second plurality of the signals having trusted data, the processor being configured to:
estimate a navigation solution based on all the received GNSS signals;
determine, for each satellite from which a signal is received, an estimated measurement from the satellite based on at least the navigation solution;
determine, for each received signal, a residual comprising the difference between the estimated measurement from the satellite transmitting the received signal and a pseudo-range of the respective signal;
determine a statistic from the residuals of the first plurality of signals;
compare the statistic to a first value; and
responsive to the comparison determining the navigation solution to be verified or not to be verified.

16. A computer program comprising computer program code configured to cause one or more processors to perform all the steps of the method as claimed in any one of the preceding claims when said computer program is run on said one or more processors.
